# EUROPEAN PATENT SPECIFICATION

(11) **EP 2 046 688 B1**
(45) Date of publication and mention of the grant of the patent: **12.09.2012**
(21) Application number: 07719131.0
(22) Date of filing: 27.06.2007
(51) Int. Cl.: C02F 1/461, C25B 1/24, C02F 1/467, C25B 1/26

(54) **IMPROVED WATER TREATMENT METHOD**
VERBESSERTES WASSERBEHANDLUNGSVERFAHREN
PROCÉDÉ PERFECTIONNÉ POUR LE TRAITEMENT DE L'EAU

(30) Priority: 27.06.2006 AU 2006903451; 14.07.2006 AU 2006903807
(43) Date of publication of application: 15.04.2009
(73) Proprietor: Poolrite Research PTY Ltd., Mt. Gravatt QLD 4122 (AU)
(72) Inventor: ANDERSON, Stuart, Bruce, Mt Gravatt East, Queensland 4122 (AU); HOLLOWAY, Colin, John, Waterford West, Queensland 4133 (AU); PALMER, Ross, Leslie, Mt Gravatt, Queensland 4122 (AU); REDMOND, Colin, James, Mt Gravatt, Queensland 4122 (AU)
(74) Representative: Walcher, Armin
(86) International application number: PCT/AU2007/000893
(87) International publication number: WO 2008/000029

(56) References cited:
- EP-A1- 1 602 629
- EP-A2- 0 470 841
- WO-A1-2004/080901
- JP-A- 09 201 132
- JP-A- 51 065 082
- JP-A- 2003 053 346
- JP-A- 2003 103 266
- US-B2- 6 793 846
- OTHMER: 'Encyclopedia of Chemical Technology, third edition', vol. 14, 1981 page 624, XP008102647

## Description

### FIELD OF THE INVENTION

This invention is concerned with an improved method of treatment of a body of water.

The invention is concerned particularly although not exclusively with electrolytic halogenation of water in swimming pools, spas and the like to reduce or minimize the effects of water borne micro-organisms such as bacteria, viruses, algae, parasites and the like.

This invention is also concerned with a system for conserving water employed in the backwashing of swimming pool or spa filters.

The invention is concerned particularly although not exclusively with a system for conservation of backwash water from a salt water swimming pool.

### BACKGROUND OF THE INVENTION

Progressive climate change is believed to be contributing to reduced rainfall and drought conditions in many regions around the world. Diminishing supplies of water in storage reservoirs and lowering of groundwater tables have lead to the imposition by local government authorities of water restrictions of varying severity upon domestic, commercial and agricultural water users.

While owners of swimming pools can contribute somewhat to water conservation by the use of swimming pool covers or the like to reduce evaporative losses, one major water consuming feature of a swimming pool is the requirement to backwash the pool filtration system to clear the filter of contaminants removed from the pool water or to lower the water level after a rainstorm.

In a typical domestic swimming pool installation having a volumetric capacity of from 50,000 litres to 70,000 litres, a backwash and rinse cycle for a sand filter will consume between 1000 litres to 10,000 litres each week depending upon the amount of contamination extracted from the pool water by the filter. During the backwash and rinse cycles, water is drawn from the pool via the filter pump and thence through the filter medium to a storm water drain as required by local government authorities. Similarly, when excess water due to rainfall accumulates in the swimming pool, the level is adjusted by pumping many thousands of litres of excess water to the storm water drain or sewer line.

There are potential disadvantages arising from the currently permitted methods of disposal of waste swimming pool water, either into a storm water drain or to a sewer line.

In a pool which is chlorinated by the addition of sodium or calcium hypochlorite, there are high levels of dissolved salts in the form of sodium or calcium anions whereas in a conventional salt chlorinated pool there are high levels of sodium chloride, typically in a recommended concentration of about 6000 ppm. Apart from very high salt concentrations, waste swimming pool water also can contain nitrosamines or trihalomethane (THM) compounds arising from the reaction of free chlorine cations with bodily fluids and other contaminants in the swimming pool water as well as cyanuric acid chlorine stabilizers and live and dead micro organisms such as bacteria, viruses and algae and parasites.

As storm water is usually directed from urban areas into pristine waterways such as rivers or the sea, the introduction of swimming pool waste can lead to pollution and environmental damage to native flora and fauna in the waterway adjacent the disposal site. In particular, the introduction of foreign organisms runs a serious risk of introducing pathogenic contamination in marine and human food chains.

Although there is a lower risk of contamination of the environment from swimming pool waste water being direction into a sewer line, high salt content and high chlorine content can interfere with sewage treatment processes to reduce the efficiency thereof.

In conventional "sand" filtration systems comprising a silicious particulate or crushed zeolite filter medium, both the sand and zeolite particles contain crevices which can harbour micro-organisms and effectively shelter such micro-organisms from the sterilizing effect of dissolved chlorine in the water being circulated through the filter medium. In temperate climates or otherwise where ambient conditions permit, there can be rapid growth of bacterial colonies or algae concentrations in the filter medium between filter cycles. As an electrolytic chlorinator is not activated during the backwash, rinse or bypass cycles, high concentrations of micro-organisms can be flushed from the filter system to waste.

Other problems inherent with "sand" filters comprising silicious particulate and zeolites is the tendency over a period of time for the particles to cement together as a solid mass leaving large fissures or cracks through the cemented mass thus rendering the filtration unit as ineffective. When this occurs, it is necessary to replace the filtration medium but in so doing, great care must be exercised in handling the silica sand or zeolite media as both are categorized as grade 2 carcinogens because of airborne dust. Over a period of time, both silica sand and zeolites are gradually consumed in the filtration process due to crushing and/or mechanical forces within the filter housing during use.

Generally speaking, for swimming pools employing an electrolytic chlorine generator, water in the pool is required to contain about 6000 ppm of sodium chloride (NaCl) for effective operation of the electrolytic chlorinator. Such a high salt content in the backwash and rinse water renders it unsuitable for collection and use for garden irrigation as in other grey water conservation systems due to the gradual accumulation of sodium chloride in the soil leading to degenerative salination of the soil. Ultimately this could give rise to a situation where authorities deem the pool owner's property as a contaminated site requiring expensive rehabilitation.

As used herein, the expression "swimming pool" is also intended to embrace the analogous use of spa baths, hot tubs and the like which are operated in a substantially identical manner to swimming pools. Similarly, the expression "backwash" is intended to include all water flows from a swimming pool filter to a storm water drain including backwash, rinse and bypass flows. EP 1602 629 A1 illustrates a method for producing electrolised water containing a chloride salt and an inorganic acid. EP 0 470 841 describes a method of producing sterilised water comprising electrolysing aqueous sodium chloride and acqueous hydrogen chloride. JP 0 9201132 discloses an electrolyte composition suitable for plants comprising KCl, CaCl₂ and MgCl₂.

### SUMMARY OF THE INVENTION

It is an aim of the present invention to overcome or ameliorate at least some of the shortcomings associated with prior art swimming pool water treatment systems and otherwise to give consumers a convenient choice.

According to one aspect of the invention, there is provided a method for treatment of a body of water to eliminate or reduce the effects of micro-organisms, said method comprising the steps of forming, in a body of water, an electrolyte solution containing from 1500 ppm to 9000 ppm of a soluble magnesium halide salt and 500 ppm to 3000 ppm of a soluble potassium halide salt.
treating said electrolyte solution In an electrolytic halogenation cell to form an aqueous solution of hypohalous acid; and,
returning treated electrolyte solution to said body of water.

Suitably, said electrolyte solution contains from 2000 ppm to 6000 ppm of a soluble magnesium halide salt.

Preferably, said electrolyte solution contains from 2500 ppm to 3000 ppm of a soluble magnesium halide salt.

Suitably said electrolyte solution contains from 600 ppm to 3000 ppm of a soluble potassium halide salt.

Preferably, said electrolyte solution contains from 1000 ppm to 2500 ppm of a soluble potassium halide salt.

The electrolyte solution may contain from 0 ppm to 600 ppm of a soluble sodium halide salt

If required, the electrolyte solution may contain from 0 ppm to 300 ppm of a soluble alkali metal halide salt selected from LiBr, NaBr, CaBr₂, MgBr₂ or mixtures thereof.

Preferably, magnesium halide, potassium halide and sodium halide salts are chloride salts.

Preferably, said treated electrolyte solution contains Mg(OH)₂.

Suitably, said electrolyte solution is filtered through a filter medium before return to said body of water.

Preferably, said filter medium comprises a particulate amorphous siliceous composition.

Desirable, said filter medium comprises crushed or milled glass particles.

Preferably, said electrolyte solution is directed to said electrolytic halogenation cell via a settling tank to assist in separation of particulate contaminants.

Alternatively, said electrolyte solution is directed, during a backwash, rinse or bypass cycle to a collection tank.

The method of the invention can be used in an apparatus for conserving water in a swimming pool having a electrolytic chlorination system, said apparatus comprising:-
a fluidic coupling to a backwash outlet of a swimming pool filter valve mechanism; and,
a delivery conduit coupled at one end to said fluidic coupling and at another end to a plant irrigation system.

Suitably, said fluidic coupling comprises a flow diverter valve,

Preferably, said apparatus further includes a storage vessel located intermediate said fluidic coupling and said irrigation system.

If required, said apparatus may include a metering mechanism to control delivery of backwash water to said irrigation system.

Preferably, said metering mechanism is electrically coupled to a control system for a swimming pool filtration system.

Suitably, said swimming pool filtration system includes a particulate amorphous silica containing filtration medium.

If required, said storage vessel may have associated therewith a water sterilization system for sterilizing water in or issuing from said storarge vessel.

### BRIEF DESCRIPTION OF THE DRAWINGS

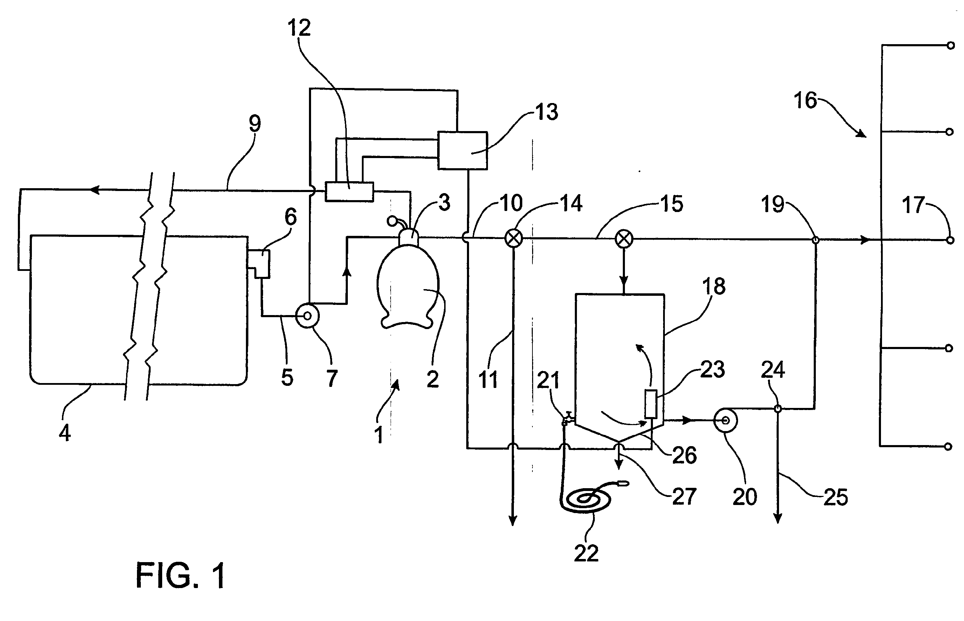

In order that the invention may be fully understood and put into practical effect, preferred embodiments will now be described with reference to the accompanying drawings in which:-
FIG. 1 shows schematically a swimming pool waste water conservation system .

### DETAILED DESCRIPTION OF THE DRAWINGS

Swimming pool owners are recommended to backwash the filtration system at regular intervals, such as weekly or fortnightly, to maintain the hygiene of the swimming pool water. Under more adverse conditions such as elevated summertime ambient conditions and/or contamination from windborne dust and the like, more frequent backwashing may be required to avoid clogging of the filter or reduced water flow therethrough.

In addition, after rain events, it may be necessary to reduce the water level in the pool to a desired level by pumping out excess water to a storm drain via a waste conduit 10.

A typical filter pump will pump water to waste at a rate of about 350 litres per minute and a backwash cycle may be from 2 to 10 minutes depending upon the extent of contamination of the filtration medium. Over a year, this could result in a water consumption of between 35 kilolitres to 175 kilolitres, not taking into account evaporative losses.

Apart from the waste of a precious resource and the consequent cost to the community arising therefrom, many local government authorities are proposing serious financial penalties for users of water over predetermined volume, typically an average household consumption value.

While other water conservation measures such as rainwater storage tanks and grey water reticulation systems for garden purposes have been proposed, overflow, backwash and rinse water from electrolytically chlorinated swimming pools is unsuited for garden use due to a high concentration of sodium chloride at about 6000 ppm.

The present invention seeks to utilize an alternative source of ionic chlorine which can allow effective chlorine levels in the swimming pool water at a substantially lower concentration than conventional sodium chloride sources.

Experiments have shown that by replacing NaCl at a recommended concentration of 6000 ppm with chloride (KCl) at a concentration of about 2500 ppm to 3000 ppm, a chlorine concentration of between 1 ppm to 3 ppm of chlorine can be maintained in an electrolytically chlorinated swimming pool with no deleterious effects on pool water hygiene.

Moreover, the application of backwash water containing from 2500 ppm to 3000 ppm of KCI, along with suspended solids, to lawn grasses and to garden plants has over an extended period of time not shown any sign of "salt burn" which might otherwise be expected from the accumulation of NaCl in the soil. Surprisingly, lawn grasses and garden plants treated with the KCl containing backwash and rinse waters were found to have thrived with a healthy dark green foliage.

Although not wishing to be bound by any particular hypothesis, it is considered that potassium anions are taken up by plants as a fertilizer and the free chlorine cations associate to form chlorine gas in such minute amounts as to be highly diluted by air to the extent that any otherwise harmful oxidizing effect on the vegetation is largely avoided. Indeed, a compound known as "muriate of potash" containing about 80-97% of KCI is sold widely as a commercial fertilizer rating 0-0-60 in NKP ratio. There are reports that application of potassium chloride to certain crops provided an enhanced resistance to fungal infections. For swimming pools however, a much more refined grade is required to avoid unsightly staining in the swimming pool and corrosion or scaling in the filtration system.

Further investigations into environmentally acceptable chlorine containing electrolytes revealed that magnesium chloride (MgCl₂) is used as a secondary fertilizer as a source of both magnesium and chloride ions essential for healthy plant development.

Moreover, magnesium as magnesium chloride is widely marketed as a complementary medicine as being linked to vital health functions including normal heart rhythms, proper muscle functions, normal protein synthesis and carbohydrate metabolism, proper operation of over 300 enzymes and helping the absorption of calcium and potassium. In the United States, the recommended daily dose of magnesium is up to 400 mg per day.

It is also reported that magnesium chloride solutions can be utilized both topically and as an antiseptic and orally as an immuno-stimulant in disease treatment. Numerous studies report good results in treatment of a wide range of ailments, in particular, skin diseases and diseases of allergic origin. Anecdotal evidence suggests that the use of potassium and/or magnesium chloride salts in a spa bath provided a significant level of relief to an eczema sufferer.

The properties of a KCl/MgCl₂ solution as a means of alleviating skin diseases such as psoriasis have been known for centuries and today Dead Sea salt is widely marketed for its beneficial pharmaceutical and cosmetic properties. A typical analysis of Dead Sea salt comprises:

| | |
|---|---|
| MgCl₂ | 53% |
| KCI | 37% |
| NaCl | 8% |

The balance of the composition comprises various trace elements in anionic or cationic form including bromides.

Another source of potassium and magnesium chlorides is Carnallite (KMgCl₃·6H₂0), a somewhat rare double chloride evaporite mineral which only forms under specific environmental conditions in an evaporating sea or sedimentary basin. Deposits of Carnallite are found in Germany, USA, Canada, Russia and the Dead Sea region.

A readily available source of a MgCl₂/KCl mixture is a by-product of harvesting NaCl from sea water by evaporation. This by-product is know as bittern and has a high concentration of dissolved salts. A typical analysis of the bittern solution is

| | |
|---|---|
| MgCl₂ | 20.5% |
| MgSO₄ | 6.7% |
| NaCl | 2.5% |
| KCI | 1.9% |

The solution also comprises trace elements in anionic and/or cationic form including bromides and typically has a specific gravity of about 1.28.

An unexpected benefit of utilizing MgCl₂ as a source of chloride ions for swimming pool sanitization is the formation of magnesium hydroxide (Mg(OH)₂) in the treated pool water as hydroxides are generated during the normal operation of a chlorinator cell to convert soluble chloride salts to chlorine as hypochlorous acid. Magnesium chloride is soluble at the normal operating pH of a swimming pool at pH 6.5 - 7.5 but starts forming an insoluble floc when the pH reaches 8 - 9.

A particular benefit of magnesium hydroxide is its flocculation capacity. Magnesium ions (Mg⁺⁺) supported by hydroxides (OH-) serve as a flocculant.

Flocculation is a process whereby particles suspended in the water are attracted to the flocculating agent and bound to it. This forms larger particles that will cease to be suspended in the water. These combined particles or "flocs" can be filtered from the water more easily than the original suspended particles.

Magnesium is a multi-valent positive ion, and can attract multiple suspended particles. Organic molecules tend to have a slight negative "dipole" due to the functional groups attached to the hydrocarbon base structure (which has no dipole charge). The slight-negative charge on the outer surface of organic molecules are attracted to the strong positive charge of the magnesium ions, leading to the formation of flocs of multiple organic molecules surrounding the small strongly charged magnesium ion. These flocs become too large and heavy to be suspended in the water and also larger than their component molecules for the purposes of filtration.

Magnesium hydroxide has a history of use as an industrial flocculant and is also used in industry for odour control, acid neutralization and sludge precipitation. This flocculation effect is important both in the pool and in a collection settling tank, if provided.

In the pool, flocs can be filtered out as the water is cycled through a pool filtration system. This leads to cleaner water, since particles that would have bypassed the filter previously will be filtered out now that they are part of larger structures.

In a collection/settling tank, the flocs will have time to settle at the bottom of the tank (below the outlet point). This will help to raise the water quality of the collected water and to reduce available nutrients for micro-organisms in the water. A collection tank is for collection of waste water from a swimming pool for conservation reasons may also serve as a settling tank.

The inclusion of a small amount of a soluble metal bromide such as KBr is believed to enhance the oxidative sterilization of swimming pool water by the generation of a small amount of bromide gas in admixture with chlorine gas but at a concentration range where the colour and odour of bromine gas is imperceptible.

In this embodiment, the generation of oxidizing chlorine and bromine gases is efficient and the sterilizing effect of potassium and/or magnesium chlorides aids the overall sterilization process. Moreover, backwash water from a swimming pool or spa or from an effluent treatment system may be safely disposed of into the environment, either into a waterway or as a fertilizer containing source of water for gardens and the like.

FIG. 1 shows one system for conserving waste water from a swimming pool, which can be used in the method of the present invention.

In a conventional swimming pool filtration system having an electrolytic or "salt" chlorinator, a filter system 1 comprising a filter body 2 containing a filtration medium and a flow control valve 3 is coupled to a swimming pool 4 via a suction line 5 coupled at one end to a skimmer box 6 and at its other end to a filter pump 7. Pump 7, in turn, is coupled via conduit to the control valve 3 which selectively diverts a flow of pressurized water into the filter body, to the return conduit 9 or through a bypass circuit in the valve 3 back to return conduit 9. The valve 3 also permits water to be directed via backwash and rinse settings to a waste conduit 10 coupled to a conduit 11 coupled to a storm water drain or a sewerline as required by local government regulation.

Also coupled into the return conduit 9 is an electrolytic chlorinator 12 electrically coupled to a controller 13 which, in turn, is electrically coupled to filter pump 7.

Waste conduit 10 may be disconnected from a storm water drain and/or a bypass valve 14 installed. Conduit 10 is then connected directly or via bypass valve 14 to an irrigation feed conduit 15 coupled to an irrigation reticulation system 16 having a plurality of sprinkler or dripper heads 17. During a backwash, rinse or bypass cycle, water which might otherwise be wasted is directed at filter pump pressure and flow rates to the reticulation system 16 designed to accommodate such pressures and flow rates.

Where local government authorities so permit, the backwash, rinse and overflow waters may be accumulated in a below ground or above ground storage tank 18 of a suitable capacity for irrigation under controlled conditions. The stored water in tank 18 may be allowed to flow to irrigation reticulation system 16 under the influence of gravity via a manual flow control valve 19 or alternatively, a water pump 20 of suitable capacity may be employed to deliver irrigation water against a head pressure at a predetermined rate to garden plants, lawns and the like.

If required, stored backwash/rinse water may be drawn from tank 18 via a tap 21 to a bucket or watering can or, via tap 21 through a garden hose 22 for direct application to lawns or garden beds.

Collection tank 18 may have a tapered floor 26 forming a sediment collection sump and an outlet valve 27 is provided to enable period disposal of sediment collected in the bottom of the tank. The supernatant liquid can then be utilized on a garden or the like or, after sterilization, by a further electrolytic chlorinator 23 the sterilized water may be redirected back to the swimming pool. Alternatively, tank 18 may be positioned between filter pump 7 and filtration system 2 to function as a settling tank to remove at least part of the suspended solids before filtration in system 2.

The aforesaid system may further enhanced by the use of an amorphous rather than crystalline silicious filter medium. One such amorphous silica containing filter medium is AFM (Registered Trade Mark) Active Filter Media available from DRYDEN AQUA of Great Britain. These amorphous products are particularly stable in a range of from pH4 to pH10 and static leaching tests show no detectable leaching.

Compared with conventional silicious filtration media, amorphous silica containing filtration media do not cement together as a solid mass, are more efficient in that up to 30% more solids removal is claimed and due to a high zeta potential smaller solids particles, heavy metals and dissolved organics are removed by surface absorption.

Still further comparative beneficial properties claimed are:-
surface catalytic properties makes the media self-sterilizing;
does not become blocked by bacterial growth in the filter bed;
easier to backwash requiring less pump energy and up to 50% less water,
filtration medium has a very high attrition strength leading to reduced media loss;
smooth, non-porous structure leading to reduced harbouring of micro-organisms;
reduced levels of THM (trihalomethanes).

By utilizing an amorphous particulate silicious filtration medium in conjunction with the ohlorine containing electrolytes used in the method according to the invention, it is believed that the quality of water directed to waste from backwashing, rinsing or filter bypass to reduce swimming pool levels will be substantially less harmful to the environment when directed though a storm water drain or less harmful to process systems for sewer waste. Moreover, the reduction in pathogenic contamination of swimming pool waste waters can permit the direct application of waste water, collected in storage tank 18 to be used directly on lawns or gardens without the attendant risks normally associated with silica sand or zeolite filter media or even grey water application to domestic lawns and gardens.

Where water may be drawn from storage tank 18 on an intermittent basis, the tank may include therein a sterilizing device 23 such as a convection electrolytic chlorinator operating at a low duty cycle to generate sufficient free chlorine to sterilize the stored waterto a degree that it may be freely applied to gardens or otherwise recycled for domestic use via a two-way valve 24 via a conduit 25 to the plumbing system (not shown) of a domestic dwelling. The chlorinating device 23 may be coupled to the filtration system controller 13 or to its own control system (not shown).

The use of magnesium chloride as a source of chlorine ions in an electrolytic pool chlorinator, apart from its claimed pharmacological benefits, in combination with potassium chloride, permits disposal of waste water from a swimming pool or the like in a much more environmentally responsible manner than hitherto with sodium chloride electrolytes. Moreover, as both magnesium and potassium are important for plant growth and nutrition, disposal of swimming pool waste water on gardens or the like is beneficial to plants rather than deleterious as otherwise would be the case with sodium chloride electrolytes.

Swimming pools utilizing the magnesium chloride electrolytes used in the method according to the invention exhibit a much greater level of visual clarity and sparkle when the pool is operated within the recommended pH range as magnesium hydroxide is fully soluble in that range. As pH is allowed to creep towards an alkaline value of between pH8 and pH9, an insoluble magnesium hydroxide floc begins to form and as it does so, is sequesters hydroxyl Ions thereby providing at least a limited degree of pH buffering.

It readily will be apparent to a person skilled in the art that many modifications and variations may be made to the various aspects of the invention without departing from the spirit and scope thereof.

## Claims

1. A method for treatment of a body of water to eliminate or reduce the effects of micro-organisms, said method comprising the steps of forming, in a body of water, an electrolyte solution containing from 1500 ppm to 9000 ppm of a soluble magnesium halide salt and 500 ppm to 3000 ppm of a soluble potassium halide salt
treating said electrolyte solution in an electrolytic halogenation cell to form an aqueous solution of hypohalous acid; and,
returning treated electrolyte solution to said body of water.

2. A method as claimed in claim 1 wherein said electrolyte solution contains from 2000 ppm to 6000 ppm of a soluble magnesium halide salt.

3. A method as claimed in claim 2 wherein said electrolyte solution contains from 2500 ppm to 3000 ppm of a soluble magnesium halide salt. '

4. A method as claimed in claim 1 wherein said electrolyte solution contains from 600 ppm to 3000 ppm of a soluble potassium halide salt.

5. A method as claimed in claim 1 wherein said electrolyte solution contains from 1000 ppm to 2500 ppm of a soluble potassium halide salt.

6. A method as claimed in claim 5 wherein said electrolyte solution contains from 0 ppm to 600 ppm of a soluble sodium halide salt.

7. A method as claimed in claim 1 wherein said electrolyte solution additionally contains from 0 ppp to 300 ppm of a soluble alkali metal halide salt selected from LiBr, NaBr, CaBr₂, MgBr₂ or mixtures thereof.

8. A method as claimed in claim 1 wherein said treated electrolyte solution contains Mg(OH)₂.

9. A method as claimed in claim 6 wherein magnesium halide, potassium halide and sodium halide salts are chloride salts.

10. A method as claimed in claim 1 wherein said electrolyte solution is filtered through a filter medium before return to said body of water.

11. A method as claimed in claim 10 wherein said filter medium comprises a particulate amorphous siliceous composition.

12. A method as claimed in claim 11 wherein said filter medium comprises crushed or milled glass particles.

13. A method as claimed in claim 1 wherein said electrolyte solution is directed to said electrolytic halogenation cell via a settling tank to assist in separation of particulate contaminants.

14. A method as claimed in claim 1 wherein said electrolyte solution is directed, during a backwash, rinse or bypass cycle to a collection

## Patentansprüche

1. Verfahren zur Behandlung einer Wassermasse zur Beseitigung oder Verringerung der Einflüsse von Mikroorganismen, wobei das Verfahren folgende Stufen umfasst:
in einer Wassermasse wird eine Elektrolytlösung gebildet, die 1500 ppm bis 9000 ppm eines löslichen Magnesiumhalogenidsalzes und 500 ppm bis 3000 ppm eines löslichen Kaliumhalogenidsalzes enthält;
die Elektrolytlösung wird in einer Elektrolyt-Halogenierungszelle unter Bildung einer wässrigen Lösung einer hypohalogenigen Säure behandelt; und
die behandelte Elektrolytlösung wird in die Wassermasse zurückgeleitet.

2. Verfahren nach Anspruch 1, wobei die Elektrolytlösung von 2000 ppm bis 6000 ppm eines löslichen Magnesiumhalogenidsalzes enthält.

3. Verfahren nach Anspruch 2, wobei die Elektrolytlösung von 2500 ppm bis 3000 ppm eines löslichen Magnesiumhalogenidsalzes enthält.

4. Verfahren nach Anspruch 1, wobei die Elektrolytlösung von 600 ppm bis 3000 ppm eines löslichen Kaliumhalogenidsalzes enthält.

5. Verfahren nach Anspruch 1, wobei die Elektrolytlösung von 1000 ppm bis 2500 ppm eines löslichen Kaliumhalogenidsalzes enthält.

6. Verfahren nach Anspruch 5, wobei die Elektrolytlösung von 0 ppm bis 600 ppm eines löslichen Natriumhalogenidsalzes enthält.

7. Verfahren nach Anspruch 1, wobei die Elektrolytlösung zusätzlich von 0 ppm bis 300 ppm eines löslichen Alkalimetallhalogenidsalzes enthält, das aus LiBr, NaBr, CaBr₂, MgBr₂ oder Gemischen davon ausgewählt ist.

8. Verfahren nach Anspruch 1, wobei die behandelte Elektrolytlösung Mg(OH)₂ enthält.

9. Verfahren nach Anspruch 6, wobei es sich bei den Magnesiumhalogenid-, Kaliumhalogenid- und Natriumhalogenidsalzen um Chloridsalze handelt.

10. Verfahren nach Anspruch 1, wobei die Elektrolytlösung durch ein Filtermedium filtriert wird, bevor sie in die Wassermasse zurückgeleitet wird.

11. Verfahren nach Anspruch 10, wobei es sich beim Filtermedium um eine teilchenförmige, amorphe silikatische Zusammensetzung handelt.

12. Verfahren nach Anspruch 11, wobei das Filtermedium zerkleinerte oder gemahlene Glasteilchen umfasst.

13. Verfahren nach Anspruch 1, wobei die Elektrolytlösung über einen Absetzbehälter in die Elektrolyt-Halogenierungszelle geleitet wird, um die Abtrennung von teilchenförmigen Verunreinigungen zu unterstützen.

14. Verfahren nach Anspruch 1, wobei die Elektrolytlösung während eines Rückwasch-, Spül- oder Nebenstromzyklus in einen Sammelbehälter geleitet wird.

## Revendications

1. Procédé de traitement d'une masse d'eau pour éliminer ou réduire les effets des micro-organismes, ledit procédé comprenant les étapes suivantes : la formation, dans une masse d'eau, d'une solution d'électrolyte contenant de 1500 ppm à 9000 ppm d'un sel soluble d'halogénure de magnésium et 600 ppm à 3000 ppm d'un sel soluble d'halogénure de potassium ;
le traitement de ladite solution d'électrolyte dans une cellule électrolytique d'halogénation pour former une solution aqueuse d'acide hypohalogéneux ; et
le renvoi de la solution d'électrolyte traitée dans ladite masse d'eau.

2. Procédé selon la revendication 1, dans lequel ladite solution d'électrolyte contient de 2000 ppm à 6000 ppm d'un sel soluble d'halogénure de magnésium.

3. Procédé selon la revendication 2, dans lequel ladite solution d'électrolyte contient de 2500 ppm à 3000 ppm d'un sel soluble d'halogénure de magnésium.

4. Procédé selon la revendication 1, dans lequel ladite solution d'électrolyte contient de 600 ppm à 3000 ppm d'un sel soluble d'halogénure de potassium.

5. Procédé selon la revendication 1, dans lequel ladite solution d'électrolyte contient de 1000 ppm à 2500 ppm d'un sel soluble d'halogénure de potassium.

6. Procédé selon la revendication 5, dans lequel ladite solution d'électrolyte contient de 0 ppm à 600 ppm d'un sel soluble d'halogénure de sodium.

7. Procédé selon la revendication 1, dans lequel ladite solution d'électrolyte contient en outre de 0 ppm à 300 ppm d'un sel soluble d'halogénure de métal alcalin choisi parmi LiBr, NaBr, CaBr₂, MgBr₂ ou leurs mélanges.

8. Procédé selon la revendication 1, dans lequel ladite solution d'électrolyte traitée contient du Mg(OH)₂.

9. Procédé selon la revendication 6, dans lequel les sels d'halogénure de magnésium, d'halogénure de potassium et d'halogénure de sodium sont des sels de chlorure.

10. Procédé selon la revendication 1, dans lequel ladite solution d'électrolyte est filtrée à travers un milieu filtrant avant d'être renvoyée dans ladite masse d'eau.

11. Procédé selon la revendication 10, dans lequel ledit milieu filtrant comprend une composition siliceuse amorphe particulaire.

12. Procédé selon la revendication 11, dans lequel ledit milieu filtrant comprend des particules de verre broyé ou écrasé.

13. Procédé selon la revendication 1, dans lequel ladite solution d'électrolyte est dirigée vers ladite cellule électrolytique d'halogénation via une cuve de décantation pour faciliter la séparation des contaminants particulaires.

14. Procédé selon la revendication 1, dans lequel ladite solution d'électrolyte est dirigée, lors d'un cycle de lavage à contre-courant, de rinçage ou de dérivation, vers un réservoir de collecte.
